## Europäisches Patentamt
## European Patent Office
## Office européen des brevets

(11) Veröffentlichungsnummer: **0 230 276 B1**

(12) **EUROPÄISCHE PATENTSCHRIFT**

(45) Veröffentlichungstag der Patentschrift: **18.12.91**

(21) Anmeldenummer: **87100466.9**

(22) Anmeldetag: **15.01.87**

(51) Int. Cl.⁵: **A01F 12/44**, A01F 7/06

(54) **Selbstfahrenden Mähdrescher.**

(30) Priorität: **18.01.86 DE 3601359**

(43) Veröffentlichungstag der Anmeldung:
**29.07.87 Patentblatt 87/31**

(45) Bekanntmachung des Hinweises auf die
Patenterteilung:
**18.12.91 Patentblatt 91/51**

(84) Benannte Vertragsstaaten:
**BE FR GB**

(56) Entgegenhaltungen:
EP-A- 0 173 223          BE-A- 902 816
CA-A- 1 166 112          DE-A- 1 901 157
DE-A- 2 245 603          FR-A- 2 564 281
GB-A- 2 033 203          GB-A- 2 102 664
US-A- 3 794 047          US-A- 4 291 709
US-A- 4 328 815

(73) Patentinhaber: **CLAAS OHG**
**Postfach 1140 Münsterstrasse 31**
**W-4834 Harsewinkel- 1(DE)**

(72) Erfinder: **Dammann, Johannes, Dipl.-Ing.**
**Erfurter Ring 9**
**W-4834 Harsewinkel(DE)**
Erfinder: **Tophinke, Franz**
**Fichtenweg 6**
**W-4834 Harsewinkel(DE)**
Erfinder: **Roderfeld, Heinrich, Dipl.-Ing.**
**Nelkenstiege 1**
**W-4834 Harsewinkel(DE)**

## Beschreibung

Die Erfindung betrifft einen selbstfahrenden Mähdrescher mit einer Schneidwerksmulde und einem dieser nachgeordneten Schrägförderer, von dem aus das Erntegut in einer im Radialfluß arbeitenden aus Dreschkorb und Dreschtrommel bestehenden Drescheinheit und das größtenteils ausgedroschene Stroh im Anschluß daran einer im Axialfluß arbeitenden, aus mindestens einem Trennrotor und einem Trenngehäuse gebildeten Trenneinheit zugeführt wird, wobei der ausgedroschene Strohstrom in mindestens zwei Dreschströme aufgeteilt wird, die an entgegengesetzten Seiten der Rotationsachse der Trennrotors der Trenneinheit stirnseitig durch eine Übergabetrommel zugeführt werden, wobei der Übergabetrommel ein mit Leitschienen (Einlaufblechleitschienen) besetztes Einlaufblech zugeordnet ist.

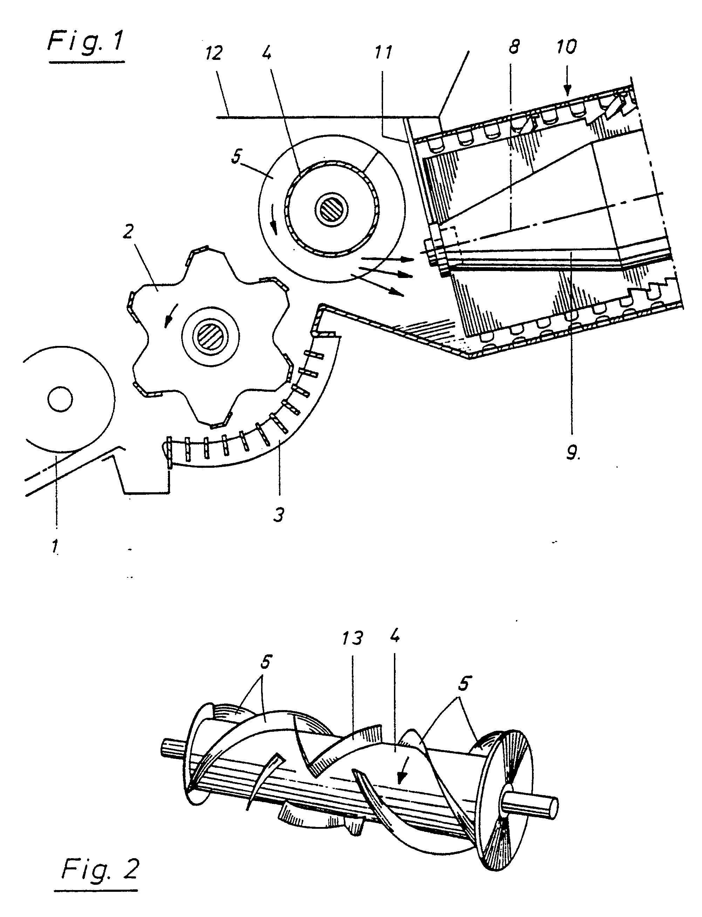

Aus der belgischen Patentschrift 902816 ist ein Mähdrescher bekannt bei dem die Trenngehäusewände der axialen Dresch- und Trenneinheit Einstanzungen aufweisen, wobei kleine Blechlappen in das Innere des Trenngehäuses ragen. Zusätzlich zu diesen Blechlappen sind gemäß Fig. 1 der belg. Patentschrift Leitschienen angeordnet, die jedoch nur im oberen Bereich des Trenngehäuses vorgesehen sind. Eine solche Anordnung hat sich in der Praxis nicht ausreichend hinsichtlich der Gutförderung erwiesen. Weiterhin ergeben sich bei dem durch diese Schrift bekannten Mähdrescher Nachteile hinsichtlich der Übergabe des Erntegutes von der Radialfluß arbeitenden Drescheinheit an die Drescheinheit, die im Axialfluß-System arbeitet.

Der vorliegenden Erfindung liegt daher die Aufgabe zugrunde, einen Mähdrescher der eingangs näher bezeichneten Art so auszubilden, daß die an ihn zu stellenden Anforderungen, insbesondere im Hinblick auf eine einwandfreie Gutförderung in zufriedenstellender Weise erfüllt sind. Das wird erfindungsgemäß dadurch erreicht, daß das Trenngehäuse an seinem der Übergabetrommel zugewandten Endbereich auf dem gesamten Umfang verteilt mit inneren Leitschienen (Trenngehäuseleitschienen) besetzt ist und daß sich die Leitschienen des Einlaufbleches (Einlaufblechleitschienen) direkt an die Leitschienen des Trenngehäuses (Trenngehäuseleitschienen) anschließen. Nach einem weiteren Merkmal der Erfindung ist zumindest die Leitschiene, mit denen das Einlaufblech besetzt ist, und zwar die mittlere, im Guttrennbereich keilförmig ausgebildet. Alternativ zu diesem Vorschlag weist die Übergabetrommel im Guttrennbereich eine umlaufende Scheibe auf, dessen äußere Umfangsfläche in mit dieser korrespondierendes Messer zugeordnet ist. Dieses Messer kann federbelastet sein, es kann aber auch das Messer nach einem weiteren Vorschlag in seiner dem äußeren Umfang der Scheibe nächsten Stellung einen geringfügigen Abstand der Scheibe aufweist.

Im folgenden soll die Erfindung anhand eines Ausführungsbeispieles und mehrerer dieses schematisch darstellen der Figuren näher erläutert werden. Dabei Zeigt:

Fig. 1 Die Drescheinheit und den vorderen Teil der Trenneinheit in der Seitenansicht nach dem Stand der Technik,

Fig. 2 die in Fig. 1 dargestellte Übergabetrommel perspektivisch,

Fig. 3 die Übergabetrommel und den vorderen Teil einer Trenneinheit in der Draufsicht nach dem Stand der Technik,

Fig. 4 eine Übergabetrommel mit einer aus zwei Trenngehäusen und Trennrotoren bestehenden Trenneinheit in der Draufsicht ebenfalls nach dem Stand der Technik,

Fig. 5 den in Fig. 1 dargestellten Teil eines Mähdreschers in abgewandelter Form, als Schnitt nach der Linie V-V der Fig. 8,

Fig. 6 die in Fig. 3 dargestellte Baugruppe in abgewandelter Ausführungsform,

Fig. 7 die in Fig. 6 dargestellte Baugruppe in perspektivischer Darstellung ohne Dresch- und Übergabetrommel,

Fig. 8 eine ähnliche Ausführungsform wie sie Fig. 6 darstellt, allerdings mit Zwei Trennrotoren,

Fig. 9 die Ausführungsform gemäß Fig. 8 von vorn gesehen in perspektivischer Darstellung und

Fig.10 eine Ausführungsform einer Übergabetrommel mit Trennscheibe perspektivisch.

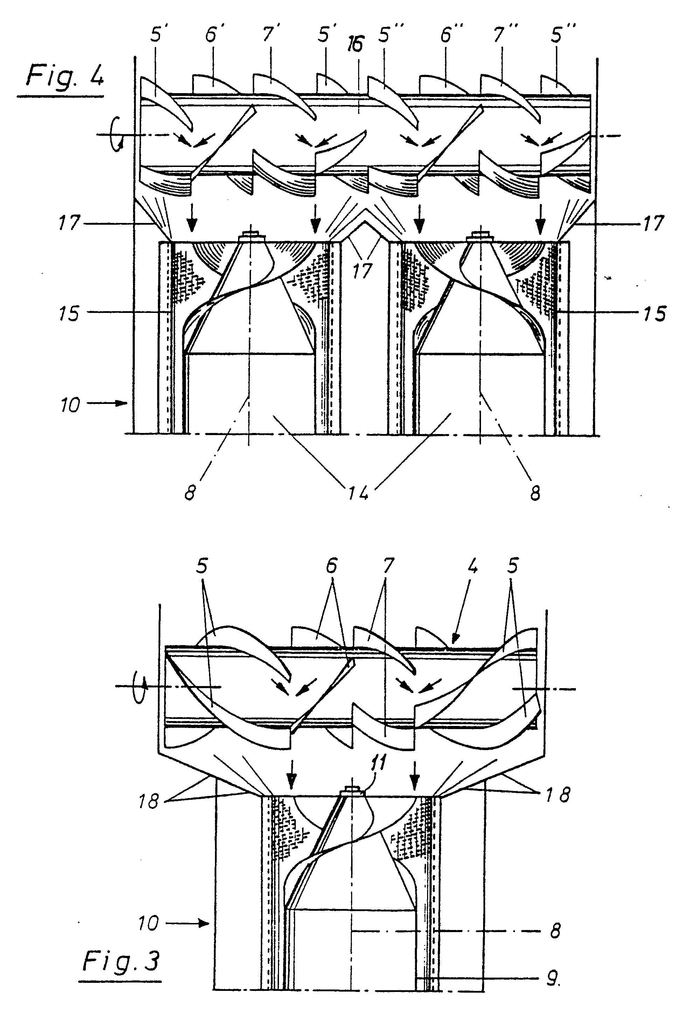

Mit 1 ist ein Schrägförderer bezeichnet, der das Erntegut einer quer zur Fahrtrichtung des nicht näher dargestellten Mähdreschers angeordneten Dreschtrommel 2 zuführt, welche mit einem Dreschkorb 3 in bekannter Weise zusammenwirkt, wodurch das Erntegut im Radialfluß ausgedroschen wird. Der noch mit Restkörnern beladene Strohstrom gelangt von hier aus zu einer Übergabetrommel 4. Diese Übergabetrommel 4 ist, wie die Fig. 3 erkennen läßt, in ihren beiden Endbereichen mit den Strohstrom von außen nach innen führenden Blechen 5 und in ihrem mittleren Bereich mit zwei Gruppen von Führungsblechen 6 und 7 besetzt, die den Strohstrom mittig aufteilen und nach außen führen. Hierdurch wird erreicht, daß der Strohstrom zu beiden Seiten der Rotationsachse 8 des Trennrotors 9 einer Trenneinheit 10 zugeführt wird, so daß sich der Strohstrom weder stirnseitig vor dem Trennrotor 9 noch vor den Rotor 9 eingangsseitig haltenden Strebe 11 aufstauen kann. Letztere ist mit ihrem der Rotationsachse 8 entgegengesetztem Ende an dem nur andeutungsweise dargestellten Maschinengehäuse 12 befestigt. Während die den Strohstrom mittig aufteilenden Führungsbleche 6 und 7 in Fig. 3 als getrennte Bleche ausgebildet sind, zeigt die Fig. 2 eine Ausführungsform, bei welcher die mittigen Bleche 13 keilförmig geformt sind. Falls die Trenneinheit aus mehr als einem Trennrotor und einem Trenngehäuse besteht, muß natürlich auch die Übergabetrommel entsprechend ausgebildet sein. Als Beispiel zeigt die Fig. 4 eine aus zwei Trennrotoren 14 und zwei Trenngehäusen 15 bestehende Trenneinheit, der eine einzige Übergabetrommel 16 vorgeschaltet ist, die breiter sein kann als die Trenneinheit. Im wesentlichen stellt die Übergabetrommel 16 dabei eine Verdoppelung der in Fig. 3 dargestellten Übergabetrommel 4 dar. Die Trommel 16 weist nämlich zwei Gruppen von Führungsblechen 5', 6', 7' und 5", 6", 7" auf, wobei jeder Gruppe den Führungsblechen 5, 6, 7 der Fig. 3 entspricht. Zwecks Erleichterung der Gutführung sind den Trenneinheiten, wie sie in den Fig. 3 und 4 dargestellt sind, ansich bekannt, feststehende, in Richtung der Trenneinheiten konvergierende Leitbleche 17 bzw. 18 zugeordnet.

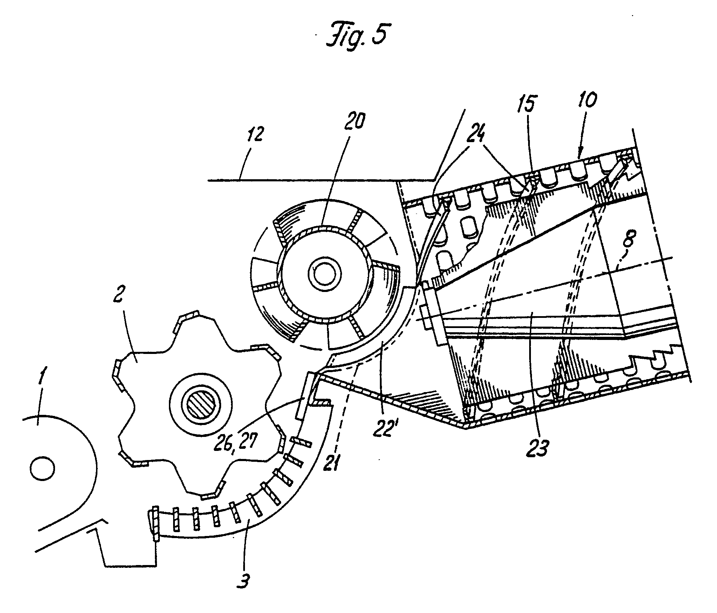

In Abwandlung zu Fig. 1 zeigen die Fig. 5, 6 und 7 eine Ausführungsform, bei welcher die Übergabetrommel 20 von einem Einlaufblech 21 teilweise umfaßt wird, wobei das Einlaufblech 21 dem äußeren wirksamen Trommelmantel angepaßt ist. Dabei ist das Einlaufblech 21 mit Leitschienen 22 besetzt. Eine solche Ausführungsform verhindert einen Staubildung im Bereich der Übergabe von der Dreschtrommel zur Trenneinheit 10. Die Gutübergabe von der Übergabetrommel 20 zu dem Trennrotor 23 wird von auf dem inneren Umfang der Trenngehäuse 15 verteilt angeordneten Leitschienen 24 unterstützt, die im vorderen Endbereich 25 der Trenngehäuse 15 angeordnet sind. Sie schließen sich, wie Fig. 7 andeutet, unmittelbar an die Leitschienen 22 des Einlaufbleches 21 an, um den kontinuierlichen Gutstrom nicht zu unterbrechen. Um zu erreichen, daß das Korngut nicht zwischen der Übergabetrommel 20 bzw. deren Führungsbleche 5, 6, 7, 13 und dem Einlaufblech 21 zerquetscht wird, ist zwischen dem wirksamen äußeren Mantel der Übergabetrommel 20 und den Leitschienen 22, 22' des Einlaufbleches 21 ein Abstand vorgesehen, der geringfügig größer ist als das zu bergende Korn. Beim Wechsel der zu erntenden Fruchtart kann es zweckmäßig sein, die Leitschienen 22 auswechselbar am Einlaufblech 21 zu befestigen.

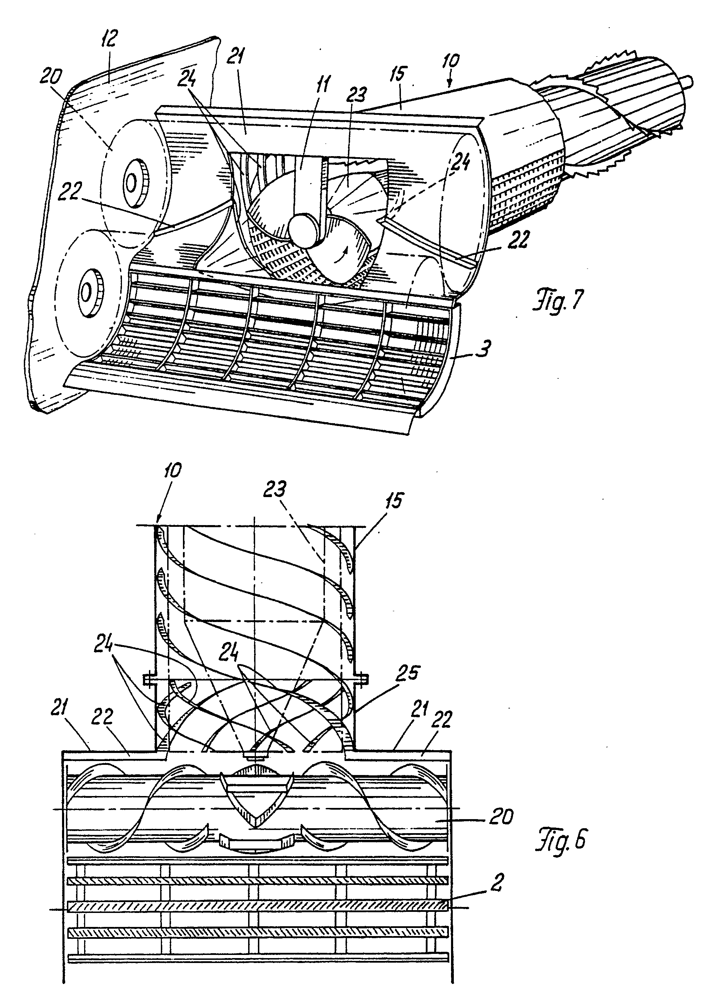

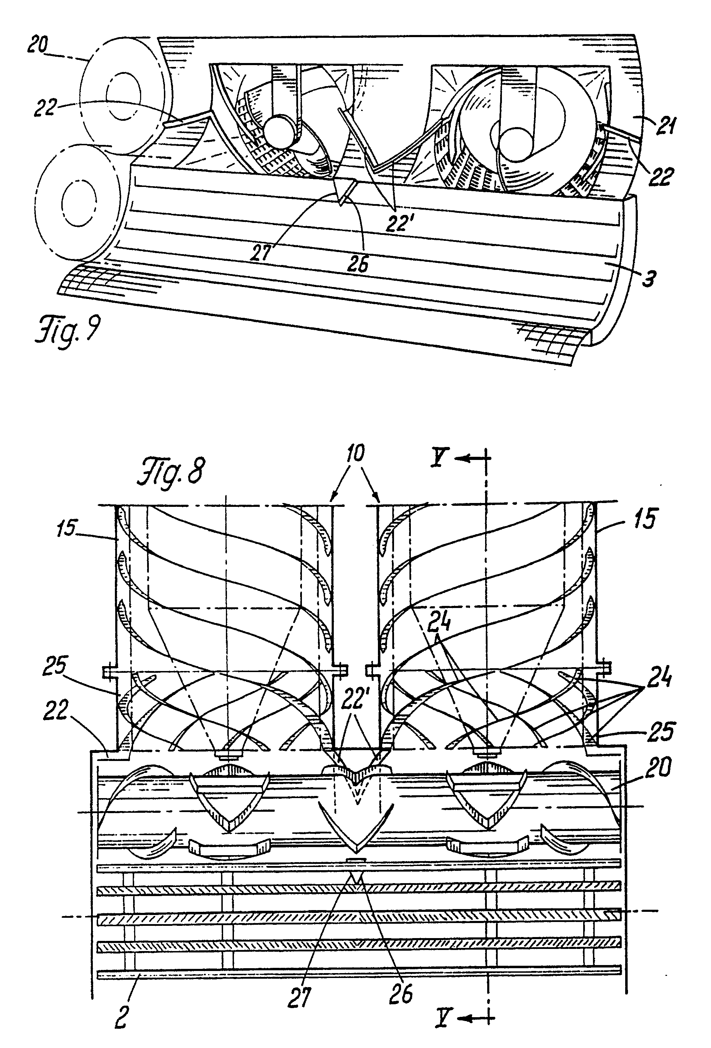

Die Fig. 8 und 9 stellen ein Ausführungsbeispiel mit zwei Trennrotoren 8 und zwei voneinander getrennten Trenngehäusen 15 dar, aus denen zu ersehen ist, daß die im Guttrennbereich am Einlaufblech 21 vorgesehene Leitschiene 22' keilförmig ausgebildet ist, wodurch im Raum vor bzw. zwischen den Trenngehäusen 15 eine bessere Guttrennung erfolgt. Bei Verwendung einer mehrrotorigen Trenneinheit ist es besonders vorteilhaft den Strohstrom bereits im mittleren Bereich dadurch zu beeinflussen, indem auf der Innenseite des Dreschkorbes 3 konvergierende Leitflächen 26, 27 angeordnet sind. Weiterhin zeigen die Figuren, ebenso wie die Fig. 6, daß die Trenngehäuse 15 in ihren Endbereichen 25 auf dem gesamten Umfang mit inneren Leitschienen 24 besetzt ist, die sich ohne nennenswerte Zwischenraum direkt an die Leitbleche 22, 22' des Einlaufbleches anschließen, wodurch eine einwandfreie Gutübergabe erreicht wird.

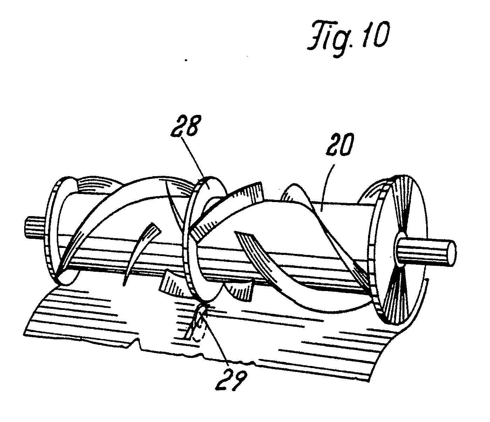

Beim Dreschen bestimmter Fruchtarten unter bestimmten Erntebedingungen neigt das Stroh stark zu Verhaken. Hier genügen entsprechend ausgebildete und angeordnete Leitschienen oftmals nicht, um die von der Drescheinrichtung herangeführte Strohmatte zu trennen. Um auch bei diesen schwierigen Fällen die Gutmatte einwandfrei in zwei Gutströme aufteilen zu können, ist, wie die Fig. 10 zeigt, die Übergabetrommel 20 mit einer umlaufenden Scheibe 28 besetzt, wobei mit dem Außenumfang dieser Scheibe ein Messer 29 korrespondiert, derart, daß die zugeführte Strohmatte regelrecht in zwei Teilströme aufgeschnitten wird. Das Messer 29 selbst kann dabei ein Rollmesser sein, welches mittels Federkraft in Richtung der Scheibe 28 gedrückt wird.

**Patentansprüche**

1. Selbstfahrender Mähdrescher mit einer Schneidwerksmulde und einem dieser nachgeordneten Schrägförderer (1), von dem aus das Erntegut einer im Radialfluß arbeitenden, aus Dreschkorb (3) und Dreschtrommel (2) bestehenden Drescheinheit, und das größtenteils ausgedroschene Stroh im Anschluß daran einer im Axialfluß arbeitenden, aus mindestens einem Trennrotor (9) und einem Trenngehäuse (15) gebildeten Trenneinheit (10) zugeführt wird, wobei der ausgedroschene Strohstrom in mindestens zwei Teilströme aufgeteilt wird, die an entgegengesetzten Seiten der Rotationsachse (8) des Trennrotors (9) der Trenneinheit (10) stirnseitig durch eine Übergabetrommel (4, 16,20) zugeführt werden, wobei der Übergabetrommel (4, 16, 20) ein mit Einlaufblechleitschienen (22, 22') besetztes Einlaufblech zugeordnet ist,
**dadurch gekennzeichnet,**
daß das Trenngehäuse (15) an seinem der Übergabetrommel (20) zugewandten Endbereich (25) auf dem gesamten Umfang verteilt mit inneren Trenngehäuseleitschienen (24) besetzt ist, und daß sich die Einlaufblechleitschienen (22) des Einlaufbleches (21) direkt an die Trenngehäuseleitschienen (24) des Trenngehäuses (15) anschließen.

2. Selbstfahrender Mähdrescher nach Anspruch 1 mit mehr als einem Trennrotor (8) und einem Trenngehäuse (15), wobei die Trenngehäuse (15) mit Abstand zueinander angeordnet sind, **dadurch gekennzeichnet,** daß zumindest die Einlaufblechleitschiene (22') mit denen das Einlaufblech (21) besetzt ist, und zwar die mittlere, im Guttrennbereich keilförmig ausgebildet ist.

3. Selbstfahrender Mähdrescher nach Anspruch 1, **dadurch gekennzeichnet,** daß die Übergabetrommel (20) im Guttrennbereich eine umlaufende Scheibe (28) aufweist, dessen äußeren Umfangsfläche ein mit dieser korrespondierendes Messer (29) zugeordnet ist.

4. Selbstfahrender Mähdrescher nach den Ansprüchen 1 und 3, **dadurch gekennzeichnet,** daß das Messer (29) federbelastet ist.

5. Selbstfahrender Mähdrescher nach den Ansprüchen 1 und 3, **dadurch gekennzeichnet,** daß das Messer (29) in seiner dem äußeren Umfang der Scheibe (28) nächsten Stellung einen geringfügigen Abstand zu der Scheibe (28) aufweist.

## Claims

1. A self-propelled combine harvester comprising a cutter tray and an inclined conveyor (1) which is arranged downstream thereof and from which the crop material is fed to a threshing unit which operates in the radial flow mode and which comprises a concave (3) and a threshing cylinder (2), and subsequently thereto the straw which has been threshed out for the major part is fed to a separating unit (10) which operates in the axial flow mode and which is formed from at least one separating rotor (9) and separating housing (15), wherein the threshed-out stream of straw is divided into at least two stream portions which are fed at opposite sides of the axis of rotation (8) of the separating rotor (9) of the separating unit (10) at the end thereof by way of a transfer drum (4, 16, 20), wherein associated with the transfer drum (4, 16, 20) is an intake plate which is equipped with intake plate guide bars (22, 22'), characterised in that at its end region (25) which is towards the transfer drum (20) the separating housing (15) is equipped with internal separating housing guide bars (24) distributed over its entire periphery and that the intake plate guide bars (22) of the intake plate (21) directly adjoin the separating housing guide bars (24) of the separating housing (15).

2. A self-propelled combine harvester according to claim 1 comprising more than one separating rotor (8) and separating housing (15), wherein the separating housings (15) are arranged at a spacing from each other characterised in that at least the intake plate guide bar (22') with which the intake plate (21) is equipped, more specifically the central one thereof, is of a wedge-like configuration in the material separation region.

3. A self-propelled combine harvester according to claim 1 characterised in that in the material separation region the transfer drum (20) has a disc (28) which extends therearound, wherein associated with the external peripheral surface thereof is a blade (29) corresponding thereto.

4. A self-propelled combine harvester according to claims 1 and 3 characterised in that the blade (29) is spring-loaded.

5. A self-propelled combine harvester according to claims 1 to 3 characterised in that in its position in which it is closest to the external periphery of the disc (28) the blade (29) is at a small spacing relative to the disc (28).

## Revendications

1. Moissonneuse-batteuse automotrice comprenant une cavité pour le mécanisme de coupe et un convoyeur incliné (1) monté en aval de ce dernier, à partir duquel le produit de la récolte est envoyé à une unité de battage fonctionnant selon un flux radial et constituée par une corbeille (3) et un tambour de battage (2), et la plus grande partie de la paille qui a été battue est envoyée à une unité de séparation (10) constituée par au moins un rotor de séparation (9) et un logement de séparation (15), le courant de paille battue étant subdivisé en au moins deux courants partiels qui sont dirigés frontalement sur les côtés opposés de l'axe de rotation (8) du rotor de séparation (9) de l'unité de séparation (10) par un tambour de transmission (4, 16, 20), ce tambour de transmission (4, 16, 20) étant associé à une tôle d'admission équipée de bandes déflectrices d'admission en tôle (22, 22'), caractérisée en ce que le logement de séparation (15) est équipé dans sa région d'extrémité (25) qui est tournée vers le tambour de transmission (20) de bandes déflectrices intérieures (24) réparties sur la totalité de sa périphérie, et en ce que les bandes déflectrices (22) de la tôle d'admission (21) se raccordent directement aux bandes déflectrices (24) du logement de séparation (15).

2. Moissonneuse-batteuse automotrice selon la revendication 1, comprenant plus d'un unique rotor de séparation (8) et plus d'un unique logement de séparation (15), les logements de séparation (15) étant disposés à une certaine distance les uns des autres, caractérisée en ce qu'au moins la bande déflectrice en tôle d'admission (22') au moyen de laquelle la tôle d'admission est équipée, soit en fait la bande centrale, est constituée sous forme d'un coin dans la région de séparation du produit.

3. Moissonneuse-batteuse automotrice selon la revendication 1, caractérisée en ce que le tambour de transmission (20) comprend dans la région de la séparation du produit un disque périphérique (28) dont la surface périphérique externe est associée à un couteau (29) correspondant.

4. Moissonneuse-batteuse automotrice selon les revendications 1 et 3 , caractérisée en ce que le couteau (29) est chargé par un ressort.

5. Moissonneuse-batteuse automotrice selon les revendications 1 et 3, caractérisée en ce que le couteau (29) est situé dans sa position la plus proche de la périphérie externe du disque (28) à une légère distance de ce disque (28).

Fig. 1

Fig. 2

Fig. 4

Fig. 3

Fig. 5

Fig. 7

Fig. 6

Fig. 9

Fig. 8

*Fig. 10*